# EUROPEAN PATENT APPLICATION

(11) **EP 4 102 190 A1**
(43) Date of publication of application: **14.12.2022**
(21) Application number: 21772260.2
(22) Date of filing: 22.02.2021
(51) Int. Cl.: G01D 21/02, G01S 13/86

(54) **INFORMATION OBTAINING METHOD AND APPARATUS**

(30) Priority: 16.03.2020 CN 202010183228
(71) Applicant: Huawei Technologies Co., Ltd., Shenzhen, Guangdong 518129, (CN)
(72) Inventor: HE, Junguang, Shenzhen, Guangdong 518129 (CN); CHENG, Wanglong, Shenzhen, Guangdong 518129 (CN); HU, Wen, Shenzhen, Guangdong 518129 (CN)
(74) Representative: Epping - Hermann - Fischer
(86) International application number: PCT/CN2021/077202
(87) International publication number: WO 2021/185024

(57) **Abstract**

This application discloses an information obtaining method and apparatus. The method includes: determining that a first sensor in environment sensing sensors in a vehicle fails; determining a first detection area of the first sensor, where the first detection area includes a first angle range, and the first angle range is an angle range in which a detection angle of the first sensor covers a driving environment around the vehicle; adjusting a second detection area of a dynamic sensor in the vehicle, so that an angle range of the second detection area covers the first angle range; and obtaining environment information by using the dynamic sensor. According to the method, after the environment sensing sensors cover the driving environment around the vehicle in a 720-degree panoramic manner, and when an environment sensing sensor fails, the dynamic sensor may be used to replace the environment sensing sensor to obtain the environment information, and there is no need to add a plurality of environment sensing sensors. This greatly reduces a waste of resources of the environment sensing sensor and has better applicability.

## Description

This application claims priority to Chinese Patent Application No. 202010183228.4, filed with the China National Intellectual Property Administration on March 16, 2020 and entitled "INFORMATION OBTAINING METHOD AND APPARATUS", which is incorporated herein by reference in its entirety.

### TECHNICAL FIELD

This application relates to the field of autonomous driving technologies, and in particular to an information obtaining method and apparatus.

### BACKGROUND

In the field of autonomous driving, it is crucial to ensure driving safety of a vehicle. Currently, in some autonomous driving application scenarios, for example, in L3 and L4 automated driving system fail-operation (fail-operation) application scenarios, a security level of an autonomous vehicle needs to reach an automotive safety integrity level (automotive safety integrity level, ASIL) D, that is, a highest level of the automotive safety integrity level.

ASIL capabilities of environment sensing sensors currently used in the autonomous vehicle can only meet an ASIL B requirement. Therefore, the environment sensing sensors need to cover a driving environment around the vehicle in a 720-degree panoramic manner, that is, the vehicle needs to have two environment sensing sensors corresponding to any detection direction within a 360-degree angle range in the driving environment around the vehicle, and each environment sensing sensor can independently detect environment information in the detection direction. In this way, it can be ensured that the vehicle meets an ASIL D requirement. However, if an environment sensing sensor fails in an autonomous driving process of the vehicle, only one environment sensing sensor may detect environment information in each detection direction within an angle range of the driving environment around the vehicle that is covered by a detection angle of the environment sensing sensor, and consequently the ASIL D requirement cannot be met.

To resolve the foregoing technical problem, in the prior art, in addition to covering the driving environment around the vehicle in the 720-degree panoramic manner by the environment sensing sensors, a plurality of environment sensing sensors are usually additionally installed. In this way, once one environment sensing sensor fails, it can still be ensured that two environment sensing sensors can obtain environment information in each detection direction within an angle range corresponding to the failed environment sensing sensor. This ensures that the vehicle meets the ASIL D requirement. However, in the autonomous driving process of the vehicle, only one failed environment sensing sensor may exist in a same time period. To be specific, in the plurality of environment sensing sensors that are usually additionally installed, only an environment sensing sensor that detects a detection direction corresponding to the failed environment sensing sensor needs to enter a working state, and other environment sensing sensors may not need to enter the working state. This causes a waste of resources of the environment sensing sensor. Based on this, how to reduce the waste of the resources of the environment sensing sensor in the autonomous vehicle becomes an urgent technical problem to be resolved by a person skilled in the art.

### SUMMARY

This application provides an information obtaining method and apparatus, to resolve a problem of how to reduce a waste of resources of an environment sensing sensor in an autonomous vehicle.

According to a first aspect, this application provides an information obtaining method. The method is applied to an in-vehicle system of a vehicle, and the method includes: determining that a first sensor in environment sensing sensors in the vehicle is a failed environment sensing sensor; determining a first detection area of the first sensor, where the first detection area includes a first angle range, and the first angle range is an angle range in which a detection angle of the first sensor covers a driving environment around the vehicle; adjusting a second detection area of a dynamic sensor in the vehicle, so that an angle range of the second detection area covers the first angle range; and obtaining environment information by replacing the first sensor with the dynamic sensor.

In this implementation, the failed environment sensing sensor in the vehicle and the first detection area of the failed environment sensing sensor are first determined. Then, the second detection area of the dynamic sensor in the vehicle is adjusted to a state in which the angle range of the second detection area covers the first angle range of the first detection area. Finally, the environment information is obtained by replacing the failed environment sensing sensor with the dynamic sensor. According to the method, after the environment sensing sensors cover the driving environment around the vehicle in a 720-degree panoramic manner, and when an environment sensing sensor fails, the dynamic sensor may be used to replace the environment sensing sensor to obtain environment information in each detection direction within an angle range of the environment sensing sensor, and there is no need to add a plurality of environment sensing sensors. This greatly reduces a waste of resources of the environment sensing sensor and has better applicability.

With reference to the first aspect, in a first possible implementation of the first aspect, the adjusting a second detection area of a dynamic sensor in the vehicle, so that an angle range of the second detection area covers the first angle range includes: obtaining a first angle, where the first angle is an angle by which a central axis of the first sensor deviates from a reference coordinate axis of a vehicle coordinate system; and adjusting an angle by which a central axis of the dynamic sensor deviates from the reference coordinate axis, so that the angle by which the central axis of the dynamic sensor deviates from the reference coordinate axis is the first angle, where a detection angle of the dynamic sensor is greater than or equal to the detection angle of the first sensor.

In this implementation, the environment information may be obtained by replacing any failed environment sensing sensor with the dynamic sensor whose detection angle is greater than or equal to a detection angle of any environment sensing sensor. Therefore, setting of the dynamic sensor is simple.

With reference to the first aspect, in a second possible implementation of the first aspect, the adjusting a second detection area of a dynamic sensor in the vehicle, so that an angle range of the second detection area covers the first angle range includes: adjusting a position of the central axis of the dynamic sensor, so that the central axis of the dynamic sensor is in a calibration position corresponding to the first detection area, where the calibration position is a position pre-calibrated for the central axis of the dynamic sensor based on boundary information of the first angle range, and when the central axis of the dynamic sensor is in the calibration position, the angle range of the second detection area covers the first angle range.

In this implementation, for a detection area of each environment sensing sensor, a calibration position may be preset for the dynamic sensor, and then the second detection area of the dynamic sensor may be quickly adjusted, based on a correspondence between the detection area and the calibration position, to a state in which the angle range of the second detection area covers the first angle range. Therefore, an adjustment process is simpler.

With reference to the first aspect, in a third possible implementation of the first aspect, the adjusting a second detection area of a dynamic sensor in the vehicle, so that an angle range of the second detection area covers the first angle range includes: adjusting a second detection area of a second sensor, so that the second detection area covers the first detection area, where the dynamic sensor includes the second sensor, and a sensor type of the second sensor is the same as a sensor type of the first sensor.

In this implementation, the environment information may be obtained by replacing the failed environment sensing sensor with the dynamic sensor of the same sensor type as the failed environment sensing sensor, so that the obtained environment information is more accurate.

With reference to the first aspect, in a fourth possible implementation of the first aspect, the determining that a first sensor in environment sensing sensors in the vehicle is a failed environment sensing sensor includes: obtaining status information of the environment sensing sensors in the vehicle; and determining, based on the status information, that the first sensor in the environment sensing sensors is the failed environment sensing sensor.

In this implementation, whether the environment sensing sensor fails may be determined based on the status information uploaded by the environment sensing sensors. Therefore, a result of the determining is more accurate. With reference to the first aspect, in a fifth possible implementation of the first aspect, the method further includes: generating vehicle control information based on the environment information detected by the dynamic sensor.

In this implementation, when the environment sensing sensor fails, the environment information may be obtained by replacing the failed environment sensing sensor with the dynamic sensor, and the vehicle control information is generated based on the environment information detected by the dynamic sensor. This ensures accuracy of the vehicle control information, so that the vehicle travels more safely.

According to a second aspect, this application provides an information obtaining apparatus. The apparatus includes: a first determining module, configured to determine that a first sensor in environment sensing sensors in a vehicle is a failed environment sensing sensor; a second determining module, configured to determine a first detection area of the first sensor, where the first detection area includes a first angle range, and the first angle range is an angle range in which a detection angle of the first sensor covers a driving environment around the vehicle; an adjustment module, configured to adjust a second detection area of a dynamic sensor in the vehicle, so that an angle range of the second detection area covers the first angle range; and an obtaining module, configured to obtain environment information by replacing the first sensor with the dynamic sensor.

The apparatus in this implementation may first determine the failed environment sensing sensor in the vehicle and the first detection area of the failed environment sensing sensor, then adjust the second detection area of the dynamic sensor in the vehicle to a state in which the angle range of the second detection area covers the first angle range of the first detection area, and finally, obtain the environment information by replacing the failed environment sensing sensor with the dynamic sensor. The apparatus is applied to an in-vehicle system of an autonomous vehicle. After the environment sensing sensors cover the driving environment around the vehicle in a 720-degree panoramic manner, and when an environment sensing sensor fails, the dynamic sensor may be used to replace the environment sensing sensor to obtain environment information in each detection direction within an angle range of the environment sensing sensor, and there is no need to add a plurality of environment sensing sensors. This greatly reduces a waste of resources of the environment sensing sensor and has better applicability.

With reference to the second aspect, in a first possible implementation of the second aspect, the adjustment module is specifically configured to: obtain a first angle, where the first angle is an angle by which a central axis of the first sensor deviates from a reference coordinate axis of a vehicle coordinate system; and adjust an angle by which a central axis of the dynamic sensor deviates from the reference coordinate axis, so that the angle by which the central axis of the dynamic sensor deviates from the reference coordinate axis is the first angle, where a detection angle of the dynamic sensor is greater than or equal to the detection angle of the first sensor.

The apparatus in this implementation may obtain the environment information by replacing any failed environment sensing sensor with the dynamic sensor whose detection angle is greater than or equal to a detection angle of any environment sensing sensor. Therefore, setting of the dynamic sensor is simple.

With reference to the second aspect, in a second possible implementation of the second aspect, the adjustment module is specifically configured to: adjust a position of the central axis of the dynamic sensor, so that the central axis of the dynamic sensor is in a calibration position corresponding to the first detection area, where the calibration position is a position pre-calibrated for the central axis of the dynamic sensor based on boundary information of the first angle range, and when the central axis of the dynamic sensor is in the calibration position, the angle range of the second detection area covers the first angle range.

The apparatus in this implementation may preset, for a detection area of each environment sensing sensor, a calibration position for the dynamic sensor, and then may quickly adjust, based on a correspondence between the detection area and the calibration position, the second detection area of the dynamic sensor to a state in which the angle range of the second detection area covers the first angle range. Therefore, an adjustment process is simpler.

With reference to the second aspect, in a third possible implementation of the second aspect, the adjustment module is specifically configured to adjust a second detection area of a second sensor, so that the second detection area covers the first detection area, where the dynamic sensor includes the second sensor, and a sensor type of the second sensor is the same as a sensor type of the first sensor.

The apparatus in this implementation may obtain the environment information by replacing the failed environment sensing sensor with the dynamic sensor of the same sensor type as the failed environment sensing sensor, so that the obtained environment information is more accurate.

With reference to the second aspect, in a fourth possible implementation of the second aspect, the first determining module is specifically configured to: obtain status information of the environment sensing sensors in the vehicle; and determine, based on the status information, that the first sensor in the environment sensing sensors is the failed environment sensing sensor.

The apparatus in this implementation may determine, based on the status information uploaded by the environment sensing sensors, whether the environment sensing sensor fails. Therefore, a result of the determining is more accurate. With reference to the second aspect, in a fifth possible implementation of the second aspect, the apparatus further includes a generation module, configured to generate vehicle control information based on the environment information detected by the dynamic sensor.

When the environment sensing sensor fails, the apparatus in this implementation may obtain the environment information by replacing the failed environment sensing sensor with the dynamic sensor, and generate the vehicle control information based on the environment information detected by the dynamic sensor. This ensures accuracy of the vehicle control information, so that the vehicle travels more safely.

According to a third aspect, an embodiment of this application provides a communications apparatus. The communications apparatus includes a processor, and when the processor executes a computer program or instructions in a memory, the method according to the first aspect is performed.

According to a fourth aspect, an embodiment of this application provides a communications apparatus. The communications apparatus includes a processor and a memory. The memory is configured to store a computer program or instructions, and the processor is configured to execute the computer program or the instructions stored in the memory, to enable the communications apparatus to perform the corresponding method according to the first aspect. According to a fifth aspect, an embodiment of this application provides a communications apparatus. The communications apparatus includes a processor, a memory, and a transceiver. The transceiver is configured to: receive or send a signal. The memory is configured to store a computer program or instructions. The processor is configured to invoke the computer program or the instructions from the memory to perform the method according to the first aspect.

According to a sixth aspect, an embodiment of this application provides a communications apparatus. The communications apparatus includes a processor and an interface circuit. The interface circuit is configured to: receive a computer program or instructions and transmit the computer program or the instructions to the processor. The processor runs the computer program or the instructions to perform the corresponding method according to the first aspect.

According to a seventh aspect, an embodiment of this application provides a computer storage medium. The computer storage medium is configured to store a computer program or instructions, and when the computer program or the instructions are executed, the method according to the first aspect is implemented.

According to an eighth aspect, an embodiment of this application provides a computer program product including a computer program or instructions. When the computer program or the instructions are executed, the method according to the first aspect is implemented.

To resolve a problem of how to reduce a waste of resources of an environment sensing sensor in an autonomous vehicle, this application provides an information obtaining method and apparatus. In the method, a failed environment sensing sensor in the vehicle and a first detection area of the failed environment sensing sensor are first determined. Then, a second detection area of a dynamic sensor in the vehicle is adjusted to a state in which an angle range of the second detection area covers a first angle range of the first detection area. Finally, environment information is obtained by replacing the failed environment sensing sensor with the dynamic sensor. According to the method, after the environment sensing sensors cover a driving environment around the vehicle in a 720-degree panoramic manner, and when an environment sensing sensor fails, the dynamic sensor may be used to replace the environment sensing sensor to obtain environment information in each detection direction within an angle range of the environment sensing sensor, and there is no need to add a plurality of environment sensing sensors. This greatly reduces a waste of resources of the environment sensing sensor and has better applicability.

### BRIEF DESCRIPTION OF DRAWINGS

FIG. 1 is a schematic diagram of an application scenario according to this application;
FIG. 2 is a schematic diagram of another application scenario according to this application;
FIG. 3 is a block diagram of a structure of an implementation of an in-vehicle system of a vehicle according to this application;
FIG. 4 is a schematic diagram of another application scenario according to this application;
FIG. 5 is a schematic flowchart of an implementation of an information obtaining method according to this application;
FIG. 6 is a schematic diagram of another application scenario according to this application;
FIG. 7 is a block diagram of a structure of an implementation of an information obtaining apparatus according to this application; and
FIG. 8 is a block diagram of a structure of an implementation of a chip according to this application.

### DESCRIPTION OF EMBODIMENTS

The following describes technical solutions of this application with reference to the accompanying drawings.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of' means two or more. Terms such as "first" and "second" do not limit a quantity and an execution sequence, and do not indicate a definite difference either.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

To facilitate understanding of the technical solutions of this application, the following first describes an example of an application scenario of the technical solutions provided in this application.

It can be learned with reference to content in the background that, in some autonomous driving application scenarios, for example, in L3 and L4 autonomous system fail-operation application scenarios, a security level of an autonomous vehicle needs to reach an ASIL D. ASIL capabilities of environment sensing sensors currently used in the autonomous vehicle can only meet an ASIL B requirement. Therefore, the environment sensing sensors need to cover a driving environment around the vehicle in a 720 -degree panoramic manner, that is, the vehicle needs to have two environment sensing sensors corresponding to any detection direction within a 360-degree angle range in the driving environment around the vehicle. Each environment sensing sensor can independently detect environment information in the detection direction. In this way, it can be ensured that the vehicle meets an ASIL D requirement.

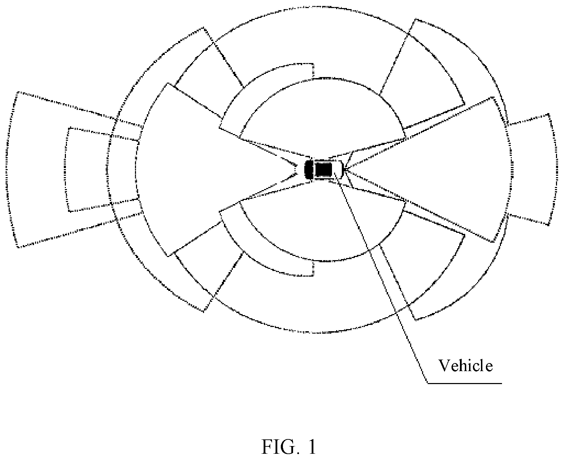

For example, FIG. 1 is a schematic diagram of an application scenario according to an embodiment of this application. As shown in FIG. 1, a driving environment around a vehicle is covered by environment sensing sensors in a 720-degree panoramic manner, that is, the vehicle has at least two environment sensing sensors corresponding to each detection direction within a 360-degree angle range in the driving environment around the vehicle, and each environment sensing sensor can independently detect environment information in the detection direction.

However, if an environment sensing sensor fails in an autonomous driving process of the vehicle, for each detection direction in an angle range of the driving environment around the vehicle that is covered by a detection angle of the environment sensing sensor, it is possible that only one environment sensing sensor can detect the environment information in the detection direction, and an ASIL D requirement cannot be met.

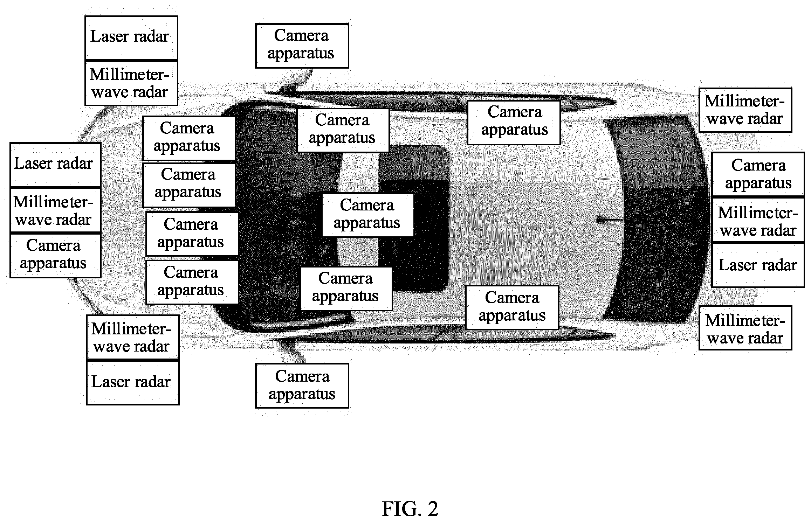

To resolve the foregoing technical problem, in the conventional technology, the driving environment around the vehicle is usually covered in a redundant 1080-degree panoramic manner, to ensure that the vehicle can still meet the ASIL D requirement when an environment sensing sensor in the autonomous vehicle fails. To be specific, in addition to the environment sensing sensors that can cover the driving environment around the vehicle in the 720-degree panoramic manner during normal working, a plurality of environment sensing sensors are usually additionally installed on the vehicle. That is, the vehicle further has a third environment sensing sensor corresponding to each detection direction in the driving environment around the vehicle, and the environment sensing sensor can also independently detect environment information in the detection direction. In this way, once one environment sensing sensor fails, it can still be ensured that two environment sensing sensors can obtain environment information in each detection direction. This ensures that the vehicle meets the ASIL D requirement. For example, for an existing arrangement manner of the environment sensing sensors in the vehicle, refer to a sensor arrangement manner shown in FIG. 2.

However, in an autonomous driving process of the vehicle, each environment sensing sensor in the vehicle periodically performs self-check. Once the environment sensing sensor fails, the environment sensing sensor is quickly repaired and is recovered to a normal working state. Therefore, in a same time period, the vehicle may usually have only one failed environment sensing sensor. Based on this, if an environment sensing sensor fails, it can be ensured that the vehicle meets the ASIL D requirement, provided that the third environment sensing sensor can detect the environment information in each detection direction within the angle range of the driving environment around the vehicle that is covered by the detection angle of the failed environment sensing sensor, and there is no need to add the plurality of environment sensing sensors. Therefore, in an existing manner, covering the driving environment around the vehicle in the redundant 1080-degree panoramic manner causes a waste of resources of the environment sensing sensor.

In conclusion, how to reduce the waste of the resources of the environment sensing sensor in the vehicle while ensuring that the autonomous vehicle meets the ASIL D requirement becomes an urgent technical problem to be resolved by a person skilled in the art.

With reference to the accompanying drawings, the following specifically describes the technical solutions provided in embodiments of this application.

An in-vehicle system of a vehicle provided in embodiments of this application is first described with reference to the accompanying drawings. An information obtaining method provided in embodiments of this application may be implemented in the in-vehicle system.

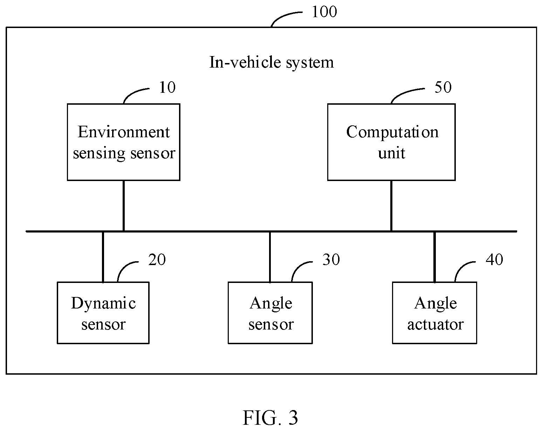

FIG. 3 is a block diagram of a structure of an implementation of an in-vehicle system of a vehicle according to this application. It can be learned with reference to FIG. 3 that the in-vehicle system 100 may include an environment sensing sensor 10, a dynamic sensor 20, an angle sensor 30, an angle actuator 40, and a computation unit 50.

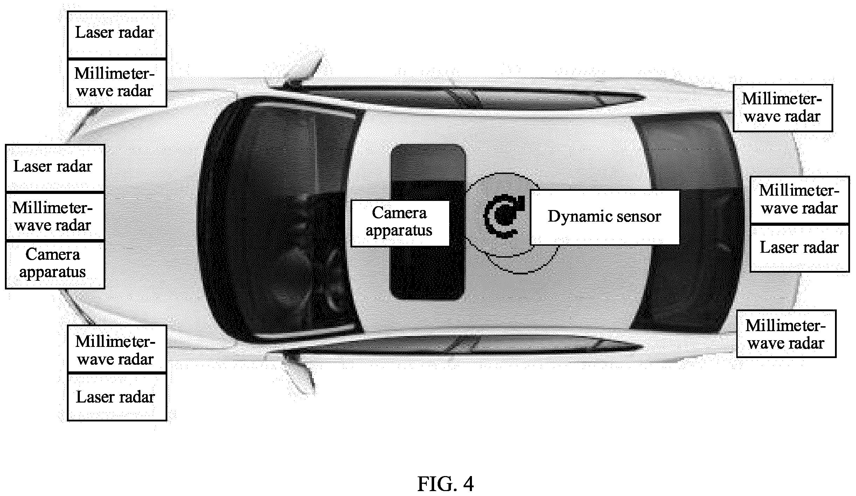

There may be a plurality of environment sensing sensors 10, and each environment sensing sensor 10 is fixedly installed on a vehicle, and may be configured to obtain environment information of a driving environment around the vehicle. The environment sensing sensor 10 may be a camera apparatus, or may be a radar apparatus, for example, a laser radar or a millimeter-wave radar. All the environment sensing sensors 10 may cover the driving environment around the vehicle in a 720-degree panoramic manner. For example, as shown in FIG. 4, for an arrangement manner of the environment sensing sensors 10 in the vehicle in this embodiment of this application, refer to an arrangement manner of environment sensing sensors shown in FIG. 4.

The dynamic sensor 20, the angle sensor 30, and the angle actuator 40 may be installed on the vehicle as a whole. For an arrangement manner of the dynamic sensor 20, refer to FIG. 4. The angle actuator 40 may drive the dynamic sensor 20 and the angle sensor 30 to rotate synchronously, the angle sensor 30 may be configured to measure a rotation angle of the angle actuator 40, and the dynamic sensor 20 may be configured to obtain the environment information of the driving environment around the vehicle.

The environment sensing sensor 10, the dynamic sensor 20, the angle sensor 30, and the angle actuator 40 each have a communication connection to the computation unit 50. For specific communication content, refer to content in the following embodiments. Details are not described herein.

A person skilled in the art may understand that the structure of the in-vehicle system shown in FIG. 3 constitutes no limitation to the in-vehicle system in this application, and the in-vehicle system in this application may include more or fewer components than those shown in the figure, or combine some components, or have different component arrangements. For example, the in-vehicle system may further include an executor. The executor may be configured to execute vehicle control information that is output by the computation unit 50, for example, control the vehicle to decelerate, accelerate, or turn. The components shown in the figure may be implemented by hardware, software, or a combination of software and hardware. This is not limited in this application.

The following describes an embodiment of an information obtaining method provided in this application.

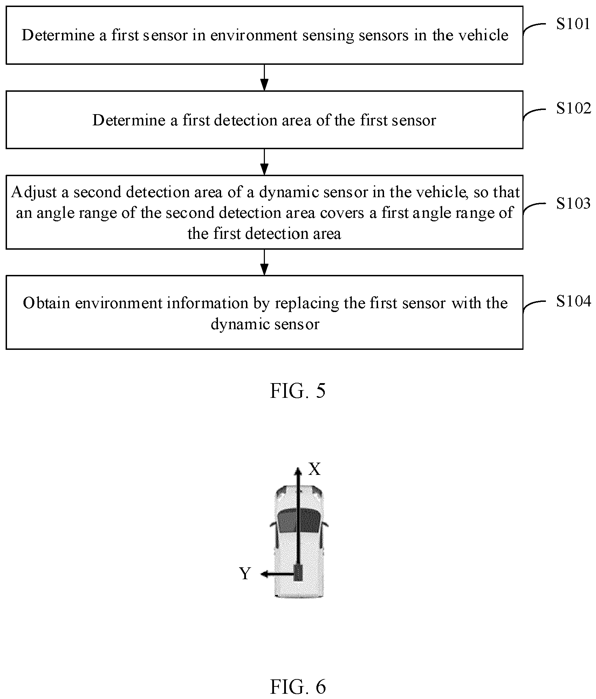

FIG. 5 is a schematic flowchart of an implementation of an information obtaining method according to this application. The information obtaining method may be applied to a computation unit of an in-vehicle system of a vehicle, for example, the computation unit 50 shown in FIG. 3. It can be learned with reference to FIG. 5 that the method may include the following steps.

Step S101: Determine a first sensor in environment sensing sensors in the vehicle.

The first sensor in the vehicle is a failed environment sensing sensor detected by the computation unit.

In a running process of the vehicle, the computation unit of the in-vehicle system of the vehicle may monitor a driving mode of the vehicle in real time. If the computation unit determines that the vehicle enters an autonomous driving mode, the computation unit may determine whether there is a failed environment sensing sensor in all the environment sensing sensors installed on the vehicle, that is, determine the first sensor in the environment sensing sensors.

The computation unit may determine the first sensor in the environment sensing sensors in a plurality of implementations.

For example, each environment sensing sensor in the vehicle may perform self-check on a running status of the environment sensing sensor, and report status information obtained through the self-check to the computation unit, where the status information includes status information indicating that normal running is performed and status information indicating that a failure occurs. After receiving the status information reported by each environment sensing sensor, the computation unit may determine, based on the status information, whether the environment sensing sensor is a failed environment sensing sensor, that is, determine whether the environment sensing sensor is the first sensor. Based on this, the computation unit may determine the first sensor in the environment sensing sensors in the following manner: obtaining status information of all the environment sensing sensors in the vehicle; and determining the first sensor in the environment sensing sensors based on the obtained status information.

For example, if communication between one or more environment sensing sensors in the vehicle and the computation unit is interrupted, the computation unit may determine these environment sensing sensors whose communication with the computation unit is interrupted as failed environment sensing sensors, that is, the first sensor. Based on this, the computation unit may further determine the first sensor in the environment sensing sensors in the following manner: determining an environment sensing sensor that is in the environment sensing sensors and whose communication with the computation unit is interrupted as the first sensor.

For example, if the status information received by the computation unit from the environment sensing sensors is garbled character information, and the garbled character information is neither the status information indicating that normal running is performed nor the status information indicating that the failure occurs, the computation unit may determine these environment sensing sensors that send the garbled character information as the failed environment sensing sensors, that is, the first sensor. Based on this, the computation unit may further determine the first sensor in the environment sensing sensors in the following manner: determining an environment sensing sensor that is in the environment sensing sensors and that sends the garbled character information as the first sensor.

Step S102: Determine a first detection area of the first sensor.

The first detection area of the first sensor is an area of a driving environment around the vehicle that can be detected by the first sensor, and the first detection area includes a first angle range and a first extension distance. The first angle range is an angle range in which a detection angle of the first sensor covers the driving environment around the vehicle, that is, an angle range of the area. The first extension distance is a longest distance between a peripheral boundary of the detection area and the vehicle, and the first extension distance is equal to a detection distance of the first sensor. After determining the first sensor in the environment sensing sensors, the computation unit needs to further determine the first detection area of the first sensor. Before the vehicle is delivered from a factory, a detection area of each environment sensing sensor in the vehicle may be usually pre-calibrated. There may be a plurality of calibration manners.

In a first calibration manner, a detection angle and a detection distance of the environment sensing sensor may be determined based on detection performance of the environment sensing sensor. An angle range of the driving environment around the vehicle that can be covered by the detection angle is an angle range of the detection area of the environment sensing sensor, and the detection distance is equal to an extension distance of the detection area. The detection angle of the environment sensing sensor is usually symmetrically distributed by using a central axis of the environment sensing sensor as an axis of symmetry. Based on this, in the first calibration manner, the detection area of the environment sensing sensor may be calibrated based on an angle by which the central axis of the environment sensing sensor deviates from a reference coordinate axis of a vehicle coordinate system (for example, an X axis of the vehicle coordinate system) and the detection angle and the detection distance of the environment sensing sensor. For setting of the vehicle coordinate system and the reference coordinate axis of the vehicle coordinate system, refer to FIG. 6. As shown in FIG. 6, a positive direction of the X axis of the vehicle coordinate system is a moving direction of the vehicle, an XY plane is parallel to a transverse tangent plane of the vehicle, an XZ plane is perpendicular to the XY plane, the X axis is selected as the reference coordinate axis of the vehicle coordinate system, and a positive direction of the reference coordinate axis is the positive direction of the X axis.

In a second calibration manner, because each environment sensing sensor in the vehicle is fixedly installed on the vehicle, the detection area of the environment sensing sensor may be calibrated by determining, in the vehicle coordinate system, boundary information of the angle range of the driving environment around the vehicle that is covered by the detection angle of the environment sensing sensor, for example, information about an angle by which a boundary of the angle range deviates from the reference coordinate axis of the vehicle coordinate system or information about position coordinates of one or more pixels on the boundary of the angle range, and the detection distance of the environment sensing sensor.

Based on this, the computation unit may determine the first detection area of the first sensor based on pre-configured calibration information of the detection area of the environment sensing sensor.

Step S103: Adjust a second detection area of a dynamic sensor in the vehicle, so that an angle range of the second detection area covers the first angle range of the first detection area.

After determining the first detection area of the first sensor in the vehicle, the computation unit may adjust the second detection area of the dynamic sensor in the vehicle, so that the angle range of the second detection area of the dynamic sensor can completely cover the first angle range of the first detection area of the first sensor. Subsequently, the dynamic sensor may be used to replace the first sensor to obtain environment information, to ensure that the driving environment around the vehicle can be covered by the environment sensing sensors in a 720-degree panoramic manner. This ensures that the vehicle meets an ASIL D requirement.

The second detection area of the dynamic sensor is an area of the driving environment around the vehicle that can be detected by the dynamic sensor. The angle range of the second detection area is an angle range in which a detection angle of the dynamic sensor covers the driving environment around the vehicle. Because the dynamic sensor may rotate, and the dynamic sensor may be used to detect environment information of any orientation in the driving environment around the vehicle, the second detection area of the dynamic sensor may change.

There may be a plurality of implementations of adjusting the second detection area of the dynamic sensor in the vehicle, so that the angle range of the second detection area covers the first angle range.

For example, to replace any environment sensing sensor with the dynamic sensor to obtain the environment information, the detection angle of the dynamic sensor is usually greater than or equal to a detection angle of the any environment sensing sensor. Therefore, provided that an angle by which a central axis of the dynamic sensor deviates from the reference coordinate axis of the vehicle coordinate system is adjusted to an angle by which a central axis of the first sensor deviates from the reference coordinate axis, the angle range of the second detection area of the dynamic sensor can cover the first angle range of the first detection area of the first sensor.

Based on this, there may be the following manner of adjusting the second detection area of the dynamic sensor in the vehicle, so that the angle range of the second detection area covers the first angle range: first determining, based on calibration information of the first detection area, the angle by which the central axis of the first sensor deviates from the reference coordinate axis of the vehicle coordinate system (for example, the X axis of the vehicle coordinate system), where the angle is denoted as a first angle, and then adjusting the angle by which the central axis of the dynamic sensor deviates from the reference coordinate axis, until the angle by which the central axis of the dynamic sensor deviates from the reference coordinate axis is adjusted to the first angle.

Optionally, there may be the following manner in which the computation unit adjusts the angle by which the central axis of the dynamic sensor deviates from the reference coordinate axis, until the angle by which the central axis of the dynamic sensor deviates from the reference coordinate axis is adjusted to the first angle: The computation unit first determines an angle detected by an angle sensor fastened to the dynamic sensor when the angle by which the central axis of the dynamic sensor deviates from the reference coordinate axis starts to be adjusted, where the angle is denoted as a second angle. The dynamic sensor is also calibrated before the vehicle is delivered from a factory. When the angle detected by the angle sensor is calibrated to zero degrees, the angle by which the central axis of the dynamic sensor deviates from the reference coordinate axis is zero degrees. Then, when the second angle is different from the first angle, the computation unit controls an angle actuator fastened to the dynamic sensor to rotate, and monitors a rotation angle of the angle actuator in real time by using the angle sensor, until the angle detected by the angle sensor is equal to the first angle. In this case, the angle by which the central axis of the dynamic sensor deviates from the reference coordinate axis is equal to the first angle, and the angle range of the second detection area of the dynamic sensor covers the first angle range of the first detection area of the first sensor.

For example, before the vehicle is delivered from a factory, based on boundary information of an angle range of a detection area of each environment sensing sensor, a specific position corresponding to the boundary information may be further pre-calibrated for the central axis of the dynamic sensor in the vehicle in the vehicle coordinate system, where the specific position is denoted as a calibration position. When the central axis of the dynamic sensor rotates to the calibration position, the angle range of the second detection area of the dynamic sensor covers the angle range of the detection area of the environment sensing sensor. In addition, because the detection angle of the dynamic sensor is greater than or equal to the detection angle of the any environment sensing sensor, when the central axis of the dynamic sensor is in the calibration position, the central axis of the dynamic sensor may coincide with a central axis of the environment sensing sensor, or may not coincide with the central axis of the environment sensing sensor, that is, the central axis of the dynamic sensor and the central axis of the environment sensing sensor are in two different positions.

Based on this, there may be following manner of adjusting the second detection area of the dynamic sensor in the vehicle, so that the angle range of the second detection area covers the first angle range: adjusting a position of the central axis of the dynamic sensor in the vehicle coordinate system, so that the central axis of the dynamic sensor is in a calibration position corresponding to the first detection area, where the calibration position is a position pre-calibrated for the central axis of the dynamic sensor based on boundary information of the first angle range, and when the central axis of the dynamic sensor is in the calibration position, the angle range of the second detection area of the dynamic sensor covers the first angle range of the first detection area of the first sensor.

For example, the dynamic sensor may be a combination of sensors, that is, the dynamic sensor may include a plurality of environment sensing sensors. For example, the dynamic sensor may include a camera apparatus, a laser radar, and a millimeter-wave radar. After determining the first sensor and the first detection area of the first sensor, the computation unit may obtain environment information by replacing the first sensor with an environment sensing sensor that is in the dynamic sensors and whose sensor type is the same as that of the first sensor. For example, if the first sensor is a camera apparatus, the computation unit obtains the environment information by replacing the first sensor with the camera apparatus in the dynamic sensors. If the first sensor is a laser radar, the computation unit obtains the environment information by replacing the first sensor with the laser radar in the dynamic sensors. If the first sensor is a millimeter-wave radar, the computation unit obtains the environment information by replacing the first sensor with the millimeter-wave radar in the dynamic sensors.

Based on this, there may be the following manner of adjusting the second detection area of the dynamic sensor in the vehicle, so that the angle range of the second detection area covers the first angle range: adjusting a second detection area of a second sensor, so that the second detection area covers the first detection area, where the dynamic sensor includes the second sensor, and a sensor type of the second sensor is the same as a sensor type of the first sensor. For the implementation of adjusting the second detection area of the second sensor, so that the second detection area covers the first detection area, refer to content in the foregoing embodiments. Details are not described herein again. Step S104: Obtain the environment information by replacing the first sensor with the dynamic sensor.

After the angle range of the second detection area of the dynamic sensor is adjusted to cover the first angle range of the first detection area of the first sensor, the dynamic sensor may be used to replace the first sensor to obtain the environment information. In this way, it can still be ensured that the driving environment around the vehicle is covered by the environment sensing sensors in a 720-degree panoramic manner. This ensures that the vehicle meets an ASIL D requirement.

Optionally, when the dynamic sensor is a combination of sensors, that is, the dynamic sensor may include a plurality of environment sensing sensors, in step S104, the environment information is obtained by replacing the first sensor with the second sensor.

After the environment information is obtained by replacing the first sensor with the dynamic sensor, vehicle control information may be generated based on the environment information detected by the dynamic sensor and environment information detected by another environment sensing sensor in the vehicle, and the vehicle is controlled based on the vehicle control information.

In addition, when the computation unit determines that there is no failed environment sensing sensor in all the environment sensing sensors in the vehicle, that is, there is no first sensor in the vehicle, the computation unit obtains driving road condition information, where the driving road condition information is information about a road condition of a driving road on which the vehicle actually drives, for example, information about an urban road condition or information about a highway road condition; then obtains a preset angle corresponding to the driving road condition information, where the preset angle is denoted as a third angle, and a correspondence between the driving road condition information and the preset angle is pre-stored in the system; and finally, adjusts the angle by which the central axis of the dynamic sensor deviates from the reference coordinate axis of the vehicle coordinate system, so that the angle by which the central axis of the dynamic sensor deviates from the reference coordinate axis is the third angle, and obtains, by using the dynamic sensor, environment information of a detection area corresponding to the driving road condition information. In this way, the dynamic sensor may be adjusted based on a condition of a road on which the vehicle actually drives to obtain environment information of a specific key detection area, so that availability of the dynamic sensor is improved, accuracy of environment detection in the road condition is improved, and driving safety of the vehicle is improved.

In the information obtaining method provided in this embodiment of this application, the failed environment sensing sensor in the vehicle and the first detection area of the failed environment sensing sensor are first determined. Then, the second detection area of the dynamic sensor in the vehicle is adjusted to a state in which the angle range of the second detection area covers the first angle range of the first detection area. Finally, the environment information is obtained by replacing the failed environment sensing sensor with the dynamic sensor. According to the method, after the environment sensing sensors cover the driving environment around the vehicle in a 720 -degree panoramic manner, when an environment sensing sensor fails, the dynamic sensor may be used to replace the environment sensing sensor to obtain environment information in each detection direction within an angle range of the environment sensing sensor, and there is no need to add a plurality of environment sensing sensors. This greatly reduces a waste of resources of the environment sensing sensor, and has better applicability.

The method embodiments described in this specification may be independent solutions, or may be combined based on internal logic. These solutions all fall within the protection scope of this application.

It may be understood that in the foregoing method embodiments, methods and operations implemented by the computation unit of the in-vehicle system may alternatively be implemented by a component (for example, a chip or a circuit) that can be used in the computation unit.

The foregoing mainly describes the solutions provided in embodiments of this application from a perspective of interaction between network elements. It may be understood that to implement the foregoing functions, each network element such as the environment sensing sensor, the dynamic sensor, and the computation unit of the in-vehicle system includes a corresponding hardware structure or a software module for performing each function, or a combination thereof. A person skilled in the art should be easily aware that, units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the computation unit or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely a logical function division, and may be other division in actual implementation. An example in which each functional module is obtained through division based on each corresponding function is used below for description.

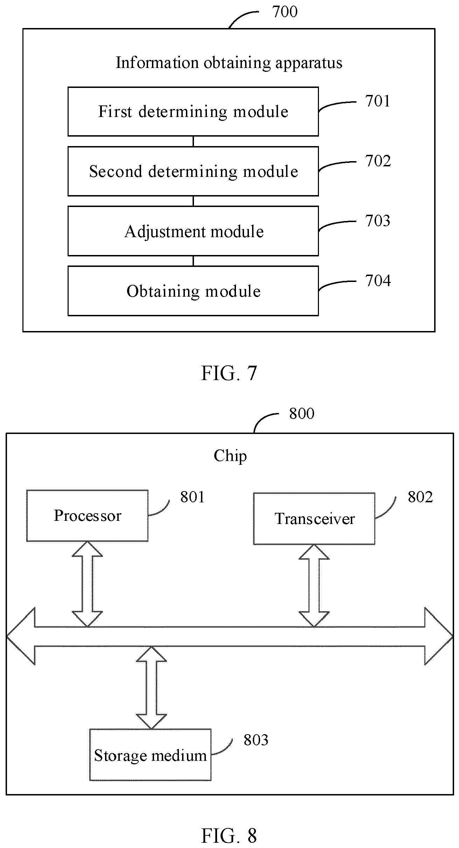

The methods provided in embodiments of this application are described above in detail with reference to FIG. 1 to FIG. 6. Apparatuses provided in embodiments of this application are described below in detail with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

FIG. 7 is a block diagram of a structure of an implementation of an information obtaining apparatus according to this application. As shown in FIG. 7, the information obtaining apparatus 700 may include a first determining module 701, a second determining module 702, an adjustment module 703, and an obtaining module 704. The information obtaining apparatus 700 may be configured to perform an action performed by the computation unit of the in-vehicle system of the vehicle in the foregoing method embodiments.

For example, the first determining module 701 is configured to determine a first sensor in environment sensing sensors in a vehicle, where the first sensor is a failed environment sensing sensor. The second determining module 702 is configured to determine a first detection area of the first sensor, where the first detection area includes a first angle range, and the first angle range is an angle range in which a detection angle of the first sensor covers a driving environment around the vehicle. The adjustment module 703 is configured to adjust a second detection area of a dynamic sensor in the vehicle, so that an angle range of the second detection area covers the first angle range. The obtaining module 704 is configured to obtain environment information by replacing the first sensor with the dynamic sensor.

Optionally, the adjustment module 703 is specifically configured to: obtain a first angle, where the first angle is an angle by which a central axis of the first sensor deviates from a reference coordinate axis of a vehicle coordinate system; and adjust an angle by which a central axis of the dynamic sensor deviates from the reference coordinate axis, so that the angle by which the central axis of the dynamic sensor deviates from the reference coordinate axis is the first angle, where a detection angle of the dynamic sensor is greater than or equal to the detection angle of the first sensor.

Optionally, the adjustment module 703 is specifically configured to: obtain a second angle, where the second angle is an angle detected by an angle sensor fastened to the dynamic sensor when the angle by which the central axis of the dynamic sensor deviates from the reference coordinate axis starts to be adjusted, and when the angle detected by the angle sensor is zero degrees, the angle by which the central axis of the dynamic sensor deviates from the reference coordinate axis is zero degrees; and if the second angle is different from the first angle, control an angle actuator fastened to the dynamic sensor to rotate, so that the angle detected by the angle sensor is equal to the first angle. Optionally, the adjustment module 703 is specifically configured to adjust a position of the central axis of the dynamic sensor, so that the central axis of the dynamic sensor is in a calibration position corresponding to the first detection area. The calibration position is a position pre-calibrated for the central axis of the dynamic sensor based on boundary information of the first angle range. When the central axis of the dynamic sensor is in the calibration position, the angle range of the second detection area covers the first angle range.

Optionally, the adjustment module 703 is specifically configured to adjust a second detection area of a second sensor, so that the second detection area covers the first detection area. The dynamic sensor includes the second sensor, and a sensor type of the second sensor is the same as a sensor type of the first sensor.

Optionally, the first determining module 701 is specifically configured to: obtain status information of the environment sensing sensors in the vehicle; and determine the first sensor in the environment sensing sensors based on the status information.

Optionally, the information obtaining apparatus 700 further includes a generation module, configured to generate vehicle control information based on the environment information detected by the dynamic sensor.

In other words, the information obtaining apparatus 700 may implement the steps or the procedures performed by the computation unit of the in-vehicle system of the vehicle in the method shown in FIG. 5 according to embodiments of this application, and the information obtaining apparatus 700 may include the modules configured to perform the method performed by the computation unit of the in-vehicle system of the vehicle in the method shown in FIG. 5. In addition, the modules in the information obtaining apparatus 700 and the foregoing other operations and/or functions are respectively used to implement corresponding steps of the method shown in FIG. 5. For example, the first determining module 701 in the information obtaining apparatus 700 may be configured to perform step S101 in the method shown in FIG. 5, the second determining module 702 may be configured to perform step S102 in the method shown in FIG. 5, the adjustment module 703 may be configured to perform step S103 in the method shown in FIG. 5, and the obtaining module 704 may be configured to perform step S104 in the method shown in FIG. 5.

It should be understood that, a specific process of performing the corresponding step by each module has been described in detail in the foregoing method embodiments. For brevity, details are not described herein again.

In addition, the information obtaining apparatus 700 may be the computation unit of the in-vehicle system of the vehicle. The computation unit may perform functions of the computation unit in the foregoing method embodiments, or implement the steps or the procedures performed by the computation unit in the foregoing method embodiments.

The computation unit may include a processor and a transceiver. Optionally, the computation unit may further include a memory. The processor, the transceiver, and the memory may communicate with each other through an internal connection path, and transfer a control signal and/or a data signal. The memory is configured to store a computer program or instructions, and the processor is configured to: invoke the computer program or the instructions from the memory and run the computer program or the instructions, to control the transceiver to receive and/or send a signal. The processor and the memory may be integrated into a processing apparatus, and the processor is configured to execute the computer program or the instructions stored in the memory to implement the foregoing functions. In a specific implementation, the memory may be integrated into the processor, or independent of the processor.

The transceiver may also be referred to as a transceiver unit. The transceiver may include a receiver (or referred to as a receiver machine or a receiver circuit) and/or a transmitter (or referred to as a transmitter machine or a transmitter circuit). The receiver is configured to receive a signal, and the transmitter is configured to send a signal.

It should be understood that the computation unit can implement processes related to the computation unit in the foregoing method embodiments. The operations and/or functions of the modules in the computation unit are separately intended to implement corresponding procedures in the foregoing method embodiments. For details, refer to the descriptions in the foregoing method embodiments. To avoid repetition, detailed descriptions are properly omitted herein.

An embodiment of this application further provides a processing apparatus, including a processor and an interface. The processor may be configured to perform the method in the foregoing method embodiments.

It should be understood that the processing apparatus may be a chip. For example, FIG. 8 is a block diagram of a structure of an implementation of a chip according to this application. The chip shown in FIG. 8 may be a general-purpose processor or a dedicated processor. The chip 800 includes a processor 801. The processor 801 may be configured to support the apparatus shown in FIG. 7 in performing the technical solutions shown in FIG. 5. Optionally, the chip 800 may further include a transceiver 802. The transceiver 802 is controlled by the processor 801, and is configured to support the apparatus shown in FIG. 7 in performing the technical solutions shown in FIG. 5. Optionally, the chip 800 shown in FIG. 8 may further include a storage medium 803.

It should be noted that the chip shown in FIG. 8 may be implemented by using the following circuit or device: one or more field programmable gate arrays (field programmable gate arrays, FPGAs), a programmable logic device (programmable logic device, PLD), an application-specific integrated circuit (application-specific integrated circuit, ASIC), or a system on chip (system on chip, SoC), a central processing unit (central processing unit, CPU), a network processor (network processor, NP), a digital signal processor (digital signal processor, DSP), a micro controller unit (micro controller unit, MCU), a controller, a state machine, gate logic, a discrete hardware component, any other suitable circuit, or any combination of circuits that can perform various functions described in this application.

In an implementation process, steps in the foregoing methods can be implemented by using a hardware integrated logical circuit in the processor or by using instructions in a form of software. The steps of the method disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In the implementation process, steps in the foregoing method embodiments can be implemented by using the hardware integrated logical circuit in the processor, or by using the instructions in a form of software. The foregoing processor may be a general-purpose processor, a digital signal processor (DSP), an application-specific integrated circuit (ASIC), a field programmable gate array (FPGA) or another programmable logic device, a discrete gate, a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

According to the method provided in embodiments of this application, an embodiment of this application further provides a computer program product. The computer program product includes a computer program or instructions. When the computer program or the instructions are run on a computer, the computer is enabled to perform the method according to the embodiment shown in FIG. 5.

According to the method provided in embodiments of this application, an embodiment of this application further provides a computer storage medium. The computer storage medium stores a computer program or instructions. When the computer program or the instructions are run on a computer, the computer is enabled to perform the method according to the embodiment shown in FIG. 5.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on the computer, the procedures or functions according to embodiments of this application are all or partially generated. The computer may be a general-purpose computer, a dedicated computer, a computer network, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

Terms such as "part", "module", and "system" used in this specification are used to indicate computer-related entities, hardware, firmware, combinations of hardware and software, software, or software being executed. For example, a part may be but is not limited to a process that runs on a processor, a processor, an object, an executable file, an execution thread, a program, and/or a computer. As shown in the figures, both a computing device and an application that run on the computing device may be components. One or more components may reside in a process and/or an execution thread, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the internet interacting with other systems by using the signal).

A person of ordinary skill in the art may be aware that, illustrative logical blocks (illustrative logical blocks) and steps (steps) described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The modules described as separate parts may or may not be physically separate, and parts displayed as modules may or may not be physical units, may be located in one position, or may be distributed on a plurality of network units. Some or all of the units may be selected based on actual requirements to achieve the objectives of the solutions of embodiments.

In addition, functional modules in embodiments of this application may be integrated into one processing unit, or each of the modules may exist alone physically, or two or more modules are integrated into one unit.

When the functions are implemented in a form of a software functional unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The information obtaining apparatus, the computer storage medium, the computer program product, and the chip provided in embodiments of this application are all configured to perform the method provided above. Therefore, for beneficial effects that can be achieved by the information obtaining apparatus, the computer storage medium, the computer program product, and the chip, refer to the beneficial effects corresponding to the method provided above. Details are not described herein again.

It should be understood that, in embodiments of this application, an execution sequence of the steps should be determined based on functions and internal logic of the steps, and sequence numbers of the steps do not mean the execution sequence, and do not constitute a limitation on an implementation process of embodiments. Embodiments in this specification are all described in a progressive manner, for same or similar parts in embodiments, refer to these embodiments, and each embodiment focuses on a difference from other embodiments. Particularly, embodiments of the information obtaining apparatus, the computer storage medium, the computer program product, and the chip are basically similar to the method embodiments, and therefore are described briefly. For related parts, refer to descriptions in the method embodiments.

Although some preferred embodiments of this application have been described, a person skilled in the art can make changes and modifications to these embodiments once the person learns the basic inventive concept. Therefore, the following claims are intended to be construed as to cover the preferred embodiments and all changes and modifications falling within the scope of this application.

The foregoing implementations of this application are not intended to limit the protection scope of this application.

## Claims

1. An information obtaining method, wherein the method is applied to an in-vehicle system of a vehicle, the method comprises:
determining that a first sensor in environment sensing sensors in the vehicle is a failed environment sensing sensor;
determining a first detection area of the first sensor, wherein the first detection area comprises a first angle range, and the first angle range is an angle range in which a detection angle of the first sensor covers a driving environment around the vehicle;
adjusting a second detection area of a dynamic sensor in the vehicle, so that an angle range of the second detection area covers the first angle range; and
obtaining environment information by using the dynamic sensor.

2. The information obtaining method according to claim 1, wherein the adjusting a second detection area of a dynamic sensor in the vehicle, so that an angle range of the second detection area covers the first angle range comprises:
obtaining a first angle, wherein the first angle is an angle by which a central axis of the first sensor deviates from a reference coordinate axis of a vehicle coordinate system; and
adjusting an angle by which a central axis of the dynamic sensor deviates from the reference coordinate axis, so that the angle by which the central axis of the dynamic sensor deviates from the reference coordinate axis is the first angle, wherein a detection angle of the dynamic sensor is greater than or equal to the detection angle of the first sensor.

3. The information obtaining method according to claim 1, wherein the adjusting a second detection area of a dynamic sensor in the vehicle, so that an angle range of the second detection area covers the first angle range comprises:
adjusting a position of the central axis of the dynamic sensor, so that the central axis of the dynamic sensor is in a calibration position corresponding to the first detection area, wherein the calibration position is a position pre-calibrated for the central axis of the dynamic sensor based on boundary information of the first angle range, and when the central axis of the dynamic sensor is in the calibration position, the angle range of the second detection area covers the first angle range.

4. The information obtaining method according to claim 1, wherein the adjusting a second detection area of a dynamic sensor in the vehicle, so that an angle range of the second detection area covers the first angle range comprises:
adjusting a second detection area of a second sensor, so that the second detection area covers the first detection area, wherein the dynamic sensor comprises the second sensor, and a sensor type of the second sensor is the same as a sensor type of the first sensor.

5. The information obtaining method according to any one of claims 1 to 4, wherein the determining that a first sensor in environment sensing sensors in the vehicle is a failed environment sensing sensor comprises:
obtaining status information of the environment sensing sensors in the vehicle; and
determining, based on the status information, that the first sensor in the environment sensing sensors is the failed environment sensing sensor.

6. The information obtaining method according to any one of claims 1 to 5, wherein the method further comprises:
generating vehicle control information based on the environment information detected by the dynamic sensor.

7. An information obtaining apparatus, wherein the apparatus comprises:a first determining module, configured to determine that a first sensor in environment sensing sensors in a vehicle is a failed environment sensing sensor;
a second determining module, configured to determine a first detection area of the first sensor, wherein the first detection area comprises a first angle range, and the first angle range is an angle range in which a detection angle of the first sensor covers a driving environment around the vehicle;
an adjustment module, configured to adjust a second detection area of a dynamic sensor in the vehicle, so that an angle range of the second detection area covers the first angle range; and
an obtaining module, configured to obtain environment information by using the dynamic sensor.

8. The information obtaining apparatus according to claim 7, wherein the adjustment module is specifically configured to:
obtain a first angle, wherein the first angle is an angle by which a central axis of the first sensor deviates from a reference coordinate axis of a vehicle coordinate system; and
adjust an angle by which a central axis of the dynamic sensor deviates from the reference coordinate axis, so that the angle by which the central axis of the dynamic sensor deviates from the reference coordinate axis is the first angle, wherein a detection angle of the dynamic sensor is greater than or equal to the detection angle of the first sensor.

9. The information obtaining apparatus according to claim 7, wherein the adjustment module is specifically configured to:
adjust a position of the central axis of the dynamic sensor, so that the central axis of the dynamic sensor is in a calibration position corresponding to the first detection area, wherein the calibration position is a position pre-calibrated for the central axis of the dynamic sensor based on boundary information of the first angle range, and when the central axis of the dynamic sensor is in the calibration position, the angle range of the second detection area covers the first angle range.

10. The information obtaining apparatus according to claim 7, wherein the adjustment module is specifically configured to:
adjust a second detection area of a second sensor, so that the second detection area covers the first detection area, wherein the dynamic sensor comprises the second sensor, and a sensor type of the second sensor is the same as a sensor type of the first sensor.

11. The information obtaining apparatus according to any one of claims 7 to 10, wherein the first determining module is specifically configured to:
obtain status information of the environment sensing sensors in the vehicle; and
determine, based on the status information, that the first sensor in the environment sensing sensors is the failed environment sensing sensor.

12. The information obtaining apparatus according to any one of claims 7 to 11, wherein the apparatus further comprises:
a generation module, configured to generate vehicle control information based on the environment information detected by the dynamic sensor.

13. An apparatus, comprising a processor and a memory, wherein
the processor is configured to execute a computer program or instructions stored in the memory, and when the computer program or the instructions are executed, the apparatus is enabled to implement the method according to any one of claims 1 to 6.
